# EUROPEAN PATENT SPECIFICATION

(11) **EP 1 339 523 B1**
(45) Date of publication and mention of the grant of the patent: **17.08.2005**
(21) Application number: 01993524.6
(22) Date of filing: 30.10.2001
(51) Int. Cl.: B23K 35/28, B23K 35/02, B32B 15/01

(54) **BRAZING METHOD WITH USE OF A BRAZING MATERIAL HAVING A LOW MELTING POINT**
LÖTVERFAHREN UNTER VERWENDUNG EINES LOTMATERIALS MIT NIEDRIGEM SCHMELZPUNKT
PROCEDE DE BRASAGE AVEC UN MATERIAU DE BRASAGE A BAS POINT DE FUSION

(30) Priority: 08.11.2000 NL 1016564; 03.07.2001 EP 01202570; 12.07.2001 US 304447 P
(43) Date of publication of application: 03.09.2003
(73) Proprietor: Corus Aluminium Walzprodukte GmbH, 56070 Koblenz (DE)
(72) Inventor: WITTEBROOD, Adrianus, Jacobus, NL-1991 HB Velserbroek (NL); WIJENBERG, Jacques, Hubert, Olga Joseph, NL-1019 PE Amsterdam (NL)
(74) Representative: Hansen, Willem Joseph Maria
(86) International application number: PCT/EP2001/012574
(87) International publication number: WO 2002/038326

(56) References cited:
- WO-A-00/71784
- FR-A- 2 617 868
- GB-A- 2 270 086
- GB-A- 2 322 323
- US-A- 2 745 799
- US-A- 3 970 237
- JACOBSON M ET AL: "A NEW LOW-MELTING-POINT ALUMINUM BRAZE" WELDING JOURNAL, AMERICAN WELDING SOCIETY. MIAMI, US, vol. 75, no. 8, 1 August 1996 (1996-08-01), pages 243-S-250-S, XP000627254 ISSN: 0043-2296
- "ALUMINUM SOFT SOLDERING" NTIS TECH NOTES, US DEPARTMENT OF COMMERCE. SPRINGFIELD, VA, US, no. 1G, January 1985 (1985-01), pages 12-13, XP002119816 ISSN: 0889-8464

## Description

### FIELD OF THE INVENTION

The invention relates to a method of manufacturing a brazed assembly with a brazing sheet product having a core sheet made of an aluminium alloy having on at least one surface of said core sheet clad an aluminium clad layer, the aluminium clad layer being made of an aluminium alloy comprising silicon in an amount in the range of 2 to 18% by weight, and a layer comprising nickel on the outer surface of said aluminium clad layer.

### DESCRIPTION OF THE RELATED ART

Brazing, by definition, employs filler metal having a liquidus above 450°C and below the solidus of the base metal. Brazing is distinguished from soldering by the melting point of the filler metal: solders melt below 450°C.

Brazing sheet products finds wide applications in heat exchangers and other similar equipment. Conventional brazing sheet products having a core sheet, typically an aluminium alloy of the Aluminium Association (AA)3000-series, having on at least one surface of said cores sheet clad an aluminium clad layer, the aluminium clad layer being made of an AA4000-series alloy comprising silicon in an amount in the range of 2 to 18 % by weight, and preferably in the range of 7 to 14 % by weight. The aluminium clad layer may be coupled to the core alloy in various ways known in the art, for example by means of roll bonding, cladding spray-forming or semi-continuous or continuous casting processes. These aluminium clad layers have a liquidus temperature typically in the range of 577 to 600°C.

Ideally, the melting point, being the temperature above which the metal is fully molten or alternatively referred to as the liquidus temperature, of the aluminium alloy clad layer should be substantially lower than the melting point of the core alloy. Otherwise, the temperature control during subsequent brazing operations becomes very critical. Aluminium alloys having a lower melting point than the melting point of aluminium clad layer cannot be used for the aluminium core layer. Hence, the high melting point of the conventional aluminium clad alloys limits the choice for possibly cheaper and/or stronger aluminium core alloys.

However, there is a market demand for brazing products such as brazing sheet products capable of being brazed into assemblies at a temperature below 570°C.

Controlled Atmosphere Brazing ("CAB") and Vacuum Brazing ("VB") are the two main processes used for industrial scale aluminium brazing. Industrial vacuum brazing has been used since the 1950's, while CAB became popular in the early 1980's after the introduction of the Nocolok (trade mark) brazing flux. Vacuum brazing is an essentially discontinuous process and puts high demands on material cleanliness. The disruption of the oxide layer present is mainly caused by the evaporation of magnesium from the clad alloy. There is always more magnesium present in the furnace then necessary. The excess magnesium condenses on the cold spots in the furnace and has to be removed frequently. The capital investment for suitable equipment is relatively high.

CAB requires an additional process step prior to brazing as compared to VB, since a brazing flux has to be applied prior to brazing. CAB is essentially a continuous process in which, if the proper brazing flux is being used, high volumes of brazed assemblies can be manufactured. The brazing flux dissolves the oxide layer at brazing temperature allowing the clad alloy to flow properly. When the Nocolok flux is used the surface needs to be cleaned thoroughly prior to flux application. To obtain good brazing results the brazing flux has to be applied on the total surface of the brazed assembly. This can cause difficulties with certain types of assemblies because of their design. For example, because evaporator type heat exchangers have a large internal surface, problems can arise because of poor access to the interior. For good brazing results the flux has to adhere to the aluminium surface before brazing. Unfortunately the brazing flux after drying can easily fall off due to small mechanical vibrations. During the brazing cycle, corrosive fumes such as HF are generated. This puts a high demand on the corrosion resistance of the materials applied for the furnace.

Ideally, a material should be available that can be used for CAB but does not have the requirements and defects of the brazing flux application. Such a material can be supplied to a manufacturer of brazed assemblies and is ready to use directly after forming of the assembly parts. No additional brazing fluxing operations have to be carried out. Presently, only one process for flux-less brazing is used on an industrial scale. The material for this process can be for example standard brazing sheet made from an AA3000-series core alloy clad on both sides with a cladding of an AA4000-series alloy. Before the brazing sheet can be used the surface has to be modified in such a way that the naturally occurring oxide layer does not interfere during the brazing cycle. The method of achieving good brazing is to deposit a specific amount of nickel on the surface of the clad alloy. If properly applied, the nickel reacts, presumably exothermically, with the underlying aluminium. The nickel can be applied by using a shim of nickel between the two parts to be joined or can be deposited by electroplating. When electroplating is used the adherence of the nickel should be sufficient to withstand typical shaping operations being used in for example heat exchanger manufacture.

The processes for nickel-plating in an alkaline solution of aluminium brazing sheet are known from each of US-3,970,237, US-4,028,200, US-4,164,454, US-4,602,731, and SAE-paper no. 880446 by B.E. Cheadle and K.F. Dockus. According to these documents, nickel or cobalt, or combinations thereof, are most preferably deposited in combination with lead. The lead addition is used to improve the wettability of the clad alloy during the brazing cycle. An important characteristic of these plating processes is that the nickel is preferentially deposited on the silicon particles of the clad alloy. To obtain sufficient nickel for brazing on the surface, the clad alloy should contain a relatively large number of silicon particles to act as nuclei for the nickel deposition. It is believed that to obtain sufficient nucleation sites before pickling a part of the aluminium in which the silicon particles are embedded should be removed by chemical and/or mechanical pre-treatment. This is believed a necessary condition to obtain a sufficient nickel coverage to serve as nuclei for the plating action of the brazing or clad alloy. On a microscopic scale the surface of the Si-containing cladding of the brazing sheet is covered with nickel globules.

However, the use of lead for the production of a suitable nickel and/or cobalt layer on brazing sheet has several disadvantages. The plating baths for electroplating are rather complex and due to the presence of lead comprising components such as salts thereof, these baths are much more environmentally unfriendly than plating baths comprising nickel- or cobalt-components alone. The use of lead for manufacturing products, such as automotive products, is undesirable and it is envisaged that in the very near future there might possibly even be a ban on lead comprising products or products manufactured via one or more intermediate processing steps comprising lead or lead-based components.

### SUMMARY OF THE INVENTION

It is an object of the present invention to provide a method of manufacturing an assembly of brazed components as defined by claim 1.

With the invention there is provided a brazing method for brazing at significantly lower temperatures as compared to traditional brazing temperatures, and achieving a good fillet formation and a very strong bonding. The brazing product according to the invention may be applied in fluxless brazing, preferably under controlled atmosphere conditions.

The aluminium brazing product forms an aluminium brazing sheet product comprising a core sheet made of an aluminium alloy, and which during a brazing operation does not melt and not to form part of the filler metal. The brazing sheet product comprises an aluminium alloy core sheet, having on at least one surface of said core sheet coupled the aluminium base substrate set out above, for example by means of cladding, and which is in the case of aluminium brazing sheet also be referred to as an aluminium clad layer, the aluminium clad layer being made of an aluminium alloy comprising silicon in an amount in the range of 2 to 18% by weight, and is typically an AA4000-series alloy, a layer comprising nickel on the outer surface of said aluminium clad layer, a separately deposited layer on one side of said layer comprising nickel, said layer comprising a metal such that taken together said aluminium clad layer and all layers exterior thereto form a metal filler having a liquidus temperature or melting temperature in the range of 490 to 570°C, and preferably in the range of 510 to 550°C.
With the brazing sheet product used in the invention there is provided a brazing sheet which may employed to braze at significantly lower temperatures as compared to traditional brazing temperatures, and achieving a very strong bonding. The brazing sheet product may be manufactured on an industrial scale without the laborious use of thin rolled metal sheets, which are difficult to manufacture themselves. With the brazing sheet product used according to the invention it is possible to braze also more unusual metals to each other, for example aluminium sheet or extrusion core alloys made of AA5000-series alloys having Mg in a range up to 6 % may be employed now in a fluxless CAB operation. At least also aluminium alloys from the AA3000 and AA6000-series aluminium alloys may be used as core alloy.

In the invention the separately deposited layer comprising copper is such that taken together with said aluminium clad layer, and all layers exterior thereto form a metal filler having a liquidus temperature in the range of 490 to 570°C, and preferably in the range of 510 to 550°C, and most preferably in the range 510 to 540°C, comprises copper or copper-based alloy, and more preferably said separately deposited layer comprises at least 60 % by weight copper. Suitable copper-based alloys may be for example brass or bronze.

Preferably the applied layer comprising copper or copper-based alloy has a thickness up to 10 micron, more preferably up to 7 micron. In the best results a thickness of about 4 micron has been used.

In particular copper has been found to significantly reduce the liquidus temperature of the metal filler. However, further metal layers of for example zinc or tin or combinations thereof may be applied in addition thereto.

In an embodiment of the brazing product according to the invention the aluminium clad layer comprises Si in a range of 2 to 18 % by weight, and preferably 5 to 14 %. And further optionally at least Mg in a range of up to 8% by weight, and preferably up to 5 % by weight, and more preferably in a range of 0.05 to 2.5 % by weight.

In a further embodiment the aluminium clad layer of the brazing sheet product comprises, in weight percent:-

| | |
|---|---|
| Si | 2 to 18, preferably 5 to 14 |
| Mg | up to 8, preferably up to 5 |
| Zn | up to 5.0 |
| Cu | up to 5.0 |
| Mn | up to 0.5 |
| In | up to 0.3 |
| Fe | up to 0.8 |
| Sr | up to 0.2 |

optionally one or more elements selected from the group consisting of:-

| | |
|---|---|
| Bi | 0.01 to 1.0 |
| Pb | 0.01 to 1.0 |
| Li | 0.01 to 1.0 |
| Sb | 0.01 to 1.0 |

impurities each up to 0.05, total up to 0.20
balance aluminium.
This aspect of the invention is based on the insight that the aluminium clad layer may comprise one or more elements selected from the group consisting of bismuth, lead, lithium and antimony, each in a range of 0.01 to 1.0%, and the combination of two or more elements does preferably not exceed 2.5%. In accordance with the invention it has been found surprisingly that the nickel layer itself does not need to comprise any lead as a mandatory alloying addition. Surprisingly it has been found that an equal or even better results can be obtained if one or more elements of the group Bi, Pb, Li, and Sb is being added in the given ranges to the aluminium clad layer itself. The addition of lead to the aluminium clad layer is very effective, however, its addition from an environmentally point of point is preferably avoided. Further alloying elements may be added to improve specific properties of the aluminium alloy clad layer. Magnesium may be present in the clad layer in a range of up to 8 %, and preferably in a range of 0.2 to 5 %, and more preferably 0.5 to 2.5%, as an alloying element to increase amongst others the strength of the base substrate or the aluminium clad layer. In accordance with the invention it has been found also that magnesium in the range of 0.2 to 2 % may also act in a similar way as elements selected from the group of bismuth, lead, lithium and antimony. Preferably the magnesium level does not exceed 2 %, when it is present essentially only to promote the wetting action of the aluminium in combination with the lead-free nickel layer. In case magnesium in the clad layer is present in an amount of more than 2 % it is preferably accompanied with one or more elements selected from the group consisting of bismuth, lead, lithium and antimony in the given ranges, and whereby the combination of two or more elements from this group does preferably not exceed 1.0 %. It has been found also that in use of the brazing product the presence of magnesium in the aluminium clad layer has no detrimental effects during a brazing operation. This is a major improvement over known brazing products. It allows that Mg-containing brazing products may be applied in both VB and fluxless CAB. The latter possibility has many economical and technical advantages.

In an embodiment of the brazing product used according to the invention said layer comprising nickel further comprises bismuth in a range up to 5% by weight. In accordance with the invention it has been found surprisingly that the nickel layer does not need to comprise any lead as a mandatory alloying addition in order to achieve good brazeability. Surprisingly it has been found that equal or even better results can be obtained if bismuth is added to the nickel layer, such that said nickel layer can be kept essentially lead-free and simultaneously also in the plating bath used for the deposition of such a Ni-Bi alloy layer.

Preferably in this brazing product the layer comprising nickel and bismuth has a thickness up to 2 µm, preferably up to 1 µm, and more preferably up to 0.5µm. A coating thickness of greater than 2 µm requires a prolonged treatment time for plating, may result in wrinkling of the molten filler material during subsequent brazing. A preferred minimum thickness for this Ni-Bi-containing layer is about 0.25µm. Also other techniques such as, thermal spraying, Chemical Vapour Deposition ("CVD") and Physical Vapour Deposition ("PVD") may be used.

In an embodiment the brazing product, is further characterised by a layer comprising zinc or tin as a bonding layer between said outer surface of said aluminium clad layer and said layer comprising nickel. By the zinc or tin comprising bonding layer a very effective bond between the aluminium alloy clad layer and the layer comprising nickel is formed, the bond remaining effective during subsequent deformation of the brazing sheet, for example by bending. The coverage of the nickel layer is no longer dependent on the surface characteristics of the bare clad layer. The brazing product obtained is suitable for flux-less brazing under controlled atmosphere conditions. The invention is based in part on the insight that to obtain a well-bonded nickel layer on the Si-containing aluminium layer of the brazing product so that the bond remains effective under large deformation, pre-treatment of the aluminium clad layer is extremely important. The prior art processes apparently aimed at applying the nickel in a distributed form, principally to the silicon particles at the surface of the aluminium clad layer, rather than trying to achieve a uniform nickel layer. In the present invention the surface of the Si-containing aluminium alloy is altered in such way that the nickel coverage is independent of the silicon particles at its surface. The nickel plating does not take place on the silicon particles but on the applied bonding layer comprising zinc or tin. Since the nickel thus is deposited on the total surface of the aluminium clad layer, the necessary reaction before brazing can take place much more easily as compared to the process of the prior art. The zinc or tin applied does not interfere at all during the brazing process, and may contain a component to assist the brazing. Since the nickel is deposited smoothly and uniformly on the surface, the use of lead to promote wetting during brazing can be reduced or avoided, or other elements such as bismuth may be used for this purpose. A further important advantage of the nickel deposited smoothly and uniformly on the surface is that the total amount of nickel to be applied in order to achieve good fluxless brazing can be reduced. Another advantage is that the complete surface coverage avoids any difficulty caused by aluminium oxide at the surface of the clad layer.

Preferably, the applied layer comprising zinc or tin has a thickness up to 0.5µm, more preferably up to 0.3µm (300nm), and most preferably in the range of 0.01 to 0.15µm (10-150nm). In the best results obtained a thickness of about 30nm has been used. A coating thickness of greater than 0.5µm requires a prolonged treatment time, e.g. for displacement plating, and is thought to have no further advantages for improving the adhesion.

In an embodiment of the brazing sheet product the aluminium alloy clad layer has a thickness ranging from about 2 to 20% of the total thickness of the total brazing sheet product thickness. Typical aluminium clad layer thickness is in the range of 40 to 80 micron. The core sheet has a thickness typically in a range of up of 5 mm, more preferably in the range of 0.1 to 2 mm.

In the brazing sheet product used according to the invention the cores sheet may be coupled to the aluminium clad layer via an intermediate layer, preferably as an anodic layer which may be any material which is anodic relative to the core, zinc or zinc-containing aluminium alloys being possible choices.

In an embodiment, the core sheet of the brazing sheet product is an aluminium alloy comprising magnesium in a range of up to 8 %. In a preferred embodiment magnesium is in a range of 0.5 to 5 %. Further alloying elements may be added in suitable ranges. It has been found that when the brazing sheet product of the invention is used, the presence of magnesium in the clad layer has no detrimental effects during brazing. This is considered a major improvement over the known brazing sheets. The diffusion of Mg from the core to the cladding during the manufacturing of the brazing sheet product itself and its application in a subsequent brazing process, appears to have no detrimental effects on the brazeability of the brazing sheet product in accordance with the invention. This allows for the design of high strength brazing sheet products having an aluminium core sheet having magnesium in the given range as an important strengthening element. The brazing sheet product may be applied in fluxless Controlled Atmosphere Brazing ("CAB"), a process being used extensively on an industrial scale.

An embodiment of the brazing product used according to this invention is characterised in that wherein taken together with said aluminium clad layer, and all layers exterior thereto have a composition comprising at least, by weight percent:-
Si in the range of 5 to 10 %, preferably 7 to 10%,
Cu in the range of 12 to 25 %, preferably 12 to 18 %,
Bi in the range up to 0.25 %, preferably in the range of 0.02 to 0.25%,
Ni in the range of 0.05 to 4 %, preferably 0.05 to 3 %,
Zn in the range up to 0.25 %, preferably up to 0.15 %,
balance aluminium and impurities.
A typical impurity element is iron, in particular originating from the aluminium base substrate or aluminium clad layer, and which may be tolerated up to 0.8 %. Other alloying elements may be present, and will typically, but not exclusively, originate from the aluminium clad layer. Typically each impurity element is present in a range of not more than 0.05 %, and the total of the impurity elements does not exceed 0.3%.
In this embodiment a metal filler is obtained which has a liquidus temperature in the range of 510 to 550°C, and allows for the manufacturing of brazed assemblies at significant lower temperatures compared to traditional industrial scale brazing temperatures.

In a further embodiment, the brazing product used according to this invention is characterised in that taken together the aluminium clad layer and all layers exterior thereto, have a composition comprising at least, by weight percent:
Si in the range of 5 to 10 %, preferably 7 to 10%,
Cu in the range of 12 to 25 %, preferably 12 to 18 %,
Bi in the range up to 0.25 %, preferably in the range of 0.02 to 0.25%,
Ni in the range of 0.05 to 4 %, preferably 0.05 to 3 %,
Zn in the range up to 20 %, preferably up to 10 %,
Sn in the range up to 5 %,
Mg in the range up to 5 %,
balance aluminium and impurities.
The limitation for the impurities have been set out above with the other embodiment.

In manufacturing the brazing product set out above, such as a brazing sheet product, the aluminium brazing product is typically plated with nickel by electroplating in an alkaline solution. Good results may be obtained when the electroplating process for nickel deposition comprises one or more of:-
(a) bath temperature 20 to 70°C, preferably 20 to 30°C;
(b) pH 7 to12, preferably pH 10 to 12, and more preferably about 10.5;
(c) current density of 0.1 to 10 A/dm², preferably 0.5 to 4 A/dm²;
(d) plating time 1 to 300 s, preferably 30 to 100 s;
(e) bath composition comprising 3 to 200 g/l nickel sulphate, preferably 50 g/l nickel sulphate, 10 to 100 g/l nickel chloride, preferably 50 g/l nickel chloride, 60 to 300 g/l sodium citrate, preferably 100 g/l sodium citrate, 5 to150 ml/l ammonium hydroxide (30% by weight), preferably 75 ml/l ammonium hydroxide. As alternative for the sodium citrate 60 to 300 g/l sodium gluconate, preferably 150 g/l sodium gluconate may be used, preferably 1 g/l lead citrate or bismuth lactate may be used.
Using these parameters in combination with the bonding layer in accordance with the invention, a well-bonded layer comprising essentially nickel is applied to the brazing sheet, the bonding remaining effective under large deformation of the nickel-plated brazing sheet and the deposition of the plating layer being independent of the silicon particles at the surface of the clad layer. A further advantage is that it is possible to perform a continuous process.

Alternatively, the aluminium brazing product is plated with nickel by electroplating in an acidic solution. Good results may be obtained when in the electroplating process for nickel deposition the parameters comprise one or more of:-
(a) bath temperature 20 to 70°C, preferably 40 to 60°C;
(b) pH in the range of 3 to 5, preferably 4 to 5;
(c) current density of 0.1 to 10 A/dm², preferably 0.5 to 5 A/dm²;
(d) plating time 1 to 300 s, preferably 20 to 100 s;
(e) bath composition comprising 5 to 400 g/l nickel sulphate, preferably 240 to 300 g/l nickel sulphate, 10 to 100 g/l nickel chloride, preferably 40 to 60 g/l nickel chloride, 5 to 100 g/l boric acid, preferably 25 to 40 g/l boric acid.
Such an electroplating process is often referred to in the act as the Watt's process. Using these parameters in combination with the bonding layer in accordance with the invention, a well-bonded layer comprising essentially nickel may be applied to the brazing product, the bonding remaining effective under large deformation of the nickel-plated brazing product, such as brazing sheet, and the deposition of the plating layer being independent of the silicon particles at the surface of the clad layer. A further advantage is that it is possible to perform a continuous process.

In an embodiment of the method according to the invention, the method is characterised in that said layer comprising nickel is deposited by electroplating both nickel and bismuth using an aqueous bath comprising a nickel-ion concentration in a range of 10 to 100 g/l and a bismuth-ion concentration in the range of 0.01 to 10 g/l.

In accordance with the invention it has been found surprisingly that the nickel layer does not need to comprise any lead as a mandatory alloying addition in order to achieve good brazeability. Surprisingly it has been found that equal or even better results can be obtained if bismuth is added to the nickel layer, such that said nickel layer can be kept essentially lead-free and simultaneously also in the plating bath used for the deposition of this Ni-Bi layer. By using this aqueous plating bath the need for the addition of lead has been overcome, which is a significant achievement from an environmental point of view.

In another aspect of manufacturing the brazing product, such as brazing sheet, said layer comprising nickel is deposited by plating both nickel and bismuth using an aqueous bath comprising a nickel-ion concentration in a range of 20 to 70 g/l and a bismuth-ion concentration in the range of 0.02 to 5 g/l.

The nickel-ion concentration to the aqueous bath can be added via the addition of nickel chloride, nickel fluoborate, nickel sulfamate, nickel acetate or nickel sulphate. However, there is a preference to use the addition of nickel sulphate (NiSO₄). At a too high level of nickel salt in the aqueous bath there is the risk of the crystallisation of the salt in the solution, which might damage a continuous process. At too low levels the resultant bath becomes uneconomical due to too long plating times and low current density.

Bi-ion in the concentration set out above can be added in various ways to the aqueous bath. In theory many bismuth compounds could be used for this purpose. However, many bismuth compound have been tried out but only very few appear to provide reliable and reproducible results. For example the addition of bismuth acetate has been tried, but it has been found that this compound did not dissolve in the plating bath used, whereas the addition of lead acetate did not result in any problems with respect to having this compound dissolved. For example also the combination of a bath of nickel-ions and bismuth-ions and a tartrate at a pH in the range of more than 8 resulted in the formation of an undesirable Ni containing sludge. This Ni containing sludge did not dissolve upon heating, indicating amongst others that Ni is unstable in the presence of a tartrate in the mentioned pH range. In accordance with the invention very good results have been obtained when Bi-ions are being added via the addition of one or more of the group consisting of bismuth carbonate (Bi₂(CO₃)₃), bismuth oxide (Bi₂O₃), bismuth citrate (BiC₆H₅O₇) and bismuth chloride (BiCl₃). Optionally some sodium hydroxide may be added also to regulate the pH of the aqueous bath. By using bismuth carbonate or bismuth oxide in the presence of nickel a suitable plating bath has been obtained which is stable at a very wide pH range. At too high levels of Bi-ion concentration in the aqueous bath the resultant deposit has a undesired high Bi-concentration. Preferably the Bi-concentration in the resultant Ni-Bi layer on the brazing sheet product is not more than 5 percent by weight, and preferably not more than 3 percent by weight. At too low levels the resultant bath becomes uneconomical due to too long plating times and low current density.

In an embodiment of the method of the invention said layer comprising nickel being deposited by plating both nickel and bismuth using an aqueous bath having:-
- a pH in the range of 2.5 to 10, and
- comprising a nickel-ion concentration in a range of 10 to 100 g/l, and preferably in a range of 20 to 70 g/l,
- a bismuth-ion concentration in the range of 0.01 to 10 g/l, and preferably in the range of 0.02 to 5 g/l,
- a citrate-ion concentration in the range of 40 to 150 g/l, and preferably in the range of 80 to 110 g/l,
- a gluconate-ion concentration in the range of 2 to 80 g/l, and preferably in the range of 4 to 50 g/l,
- a chloride- or fluoride-ion concentration in the range of 1 to 50 g/l, and preferably in the range of 1 to 30 g/l.
This aqueous plating bath demonstrated to be operational in a very wide pH range, and can be used on industrial scale coil plating lines using a high current density, which in turn allows for fairly high line speeds. Further advantages of this plating bath are that it does not generate any ammonia fumes, it can be composed using standard and readily available chemicals, and bismuth can easily be replenished to the plating bath from a bismuth concentrate or otherwise.

Baths using the following salts have proved particularly effective, in grams per litre:-
- Nickel sulphate in a range of 45 to 450 g/l, and preferably 90 to 315 g/l,
- Chloride-ion concentration in a range of 1 to 50 g/l, and preferably 1 to 30 g/l,
- Sodium citrate in a range of 55 to 180 g/l, and preferably 110 to 150 g/l,
- Sodium gluconate in range of 2 to 90 g/l, and preferably 5 to 55 g/l,
- Ammonium sulphate in a range up to 270 g/l,
- Bismuth oxide in a range of 0.02 to 22 g/l, and preferably 0.05 to 11 g/l, or

Bismuth carbonate in a range of 0.03 to 29 g/l, and preferably 0.06 to 14 g/l. The addition of an ion from the group consisting of chloride and fluoride is required for inducing anode corrosion. A suitable source of chloride-ion concentration can be done by the addition of nickel chloride (NiCl₂.6H₂O) in a range of up to 415 g/l, and preferably in a range up to 250 g/l.

(H⁺ or (OH⁻) can be added to regulate the pH in a range of 2.5 to 10. The use of ammonium hydroxide should preferably be avoided in view of the generation of ammonia fumes.

Optionally for reducing stress in the deposit layer comprising the Ni and Bi an ammonium-ion concentration in a range up to 40 g/l, and preferably in range of 1 to 25 g/l, or a triethenolamine-ion concentration in a range of up to 40 g/l, or combinations thereof, or other equivalent components may be added to the aqueous bath. Any soluble ammonium salt can be used as a source of NH₄ ⁺.

The plating bath used in the method according to the invention can operate in a wide pH range of 2.5 to 10, and preferably in the range of 4 to 8, without affecting the properties of the bath and without dissolving the aluminium clad layer in case of a brazing sheet product. If the clad layer is provided with a zinc layer, e.g. by means of a zincate treatment via direct or immersion plating, prior to the plating of the Ni-Bi layer, the pH is preferably in the range of 5 to 8, and more preferably in the range of 5.4 to 7.5.

The method according to the invention is preferably employed using a plating bath having a temperature in the rang of 30 to 70°C, and more preferably in the range of 40 to 65°C. In this temperature range the ion-mobility increases and there is no need to cool the plating bath to compensate for the heat generation during plating.

In an embodiment the method according to this invention is characterised in that said bonding layer comprising zinc or tin is applied by a direct zinc plating treatment, or by a zincate treatment or a stannate treatment. Very good results may be obtained with an immersion zincate treatment or immersion stannate treatment, often also referred to as displacement plating. A further advantage is that this treatment lends itself to application in a continuous process operation.

Zincate treatments are known per se in the art for applying layers onto aluminium. A simple basic composition for a zincate pickle comprises 40-50 g/l ZnO and 400-500 g/l NaOH. Also, other commercial available zincate baths can be used, for example ChemTec (trade name) 024202, also known as the Bondal process, and ChemTec (trade name) 024195, also known as a cyanide-free Bondal process.

Stannate treatments are known in the art for depositing a layer on aluminium to facilitate soldering, to improve electrical conductivity, and also to give a lubricated surface to aluminium alloy pistons for internal combustion engines during the running-in period. Typical alkaline stannate solutions comprise 5 to 300 g/l sodium or potassium stannate.

The zinc or tin bonding layer applied in the method of the invention may be essentially a pure zinc or tin layer or may be primarily zinc or tin (e.g. at least 50 weight %). Minor amounts of impurity elements or deliberately added elements may be present, as discussed in more detail below. Typically impurity elements are present at less than 10%, more usually less than 5% by weight in the zinc or tin layer. The zinc or tin layer may contain less than 1 % of other elements.

In an embodiment of the method according to the invention this method is characterised in that said separately deposited layer comprising copper or copper-based alloy is deposited by means of electroplating.

In an embodiment of the method according to the invention this method is characterised in that said separately deposited layer comprising copper or copper-based alloy is deposited by plating copper or copper-alloy using an aqueous alkaline copper-cyanide based plating bath.

In an embodiment of the method according to the invention this method is characterised in that said separately deposited layer comprising copper or copper-based alloy is deposited by plating copper or copper-alloy using an aqueous copper-phosphate based plating bath. This aqueous plating bath demonstrated to be operational in a wide pH range, and can be used on industrial scale plating lines using a high current density, which in turn allows for fairly high line speeds. It can be composed using standard and readily available chemicals, and copper can easily be replenished to the plating bath.
Baths using the following salt have proved particularly effective, in grams per litre:-
- a pH in the range of 7 to 11;
- copper-phosphate in a range of 5 to 200 g/l, and preferably 20 to 150 g/l, in particular copper-pyrophosphate has proven to be a suitable salt,
- potassium-pyrophosphate in a range of 50 to 700 g/l, and preferably 150 to 400 g/l.
- optionally citric acid in a range of 2 to 50 g/l, and preferably 4 to 25 g/l,
- optionally (OH⁻) can be added to regulate the pH in a range of 7 to 11.
The method according to the invention is preferably employed using a plating bath having a temperature in the range of 30 to 70°C, and more preferably in the range of 40 to 65°C. In this temperature range the ion-mobility increases and there is no need to cool the plating bath to compensate for the heat generation during plating.
In dependence of the aluminium alloy of the core sheet the process may include the further processing step (e) of ageing of the brazed and cooled assembly in order to optimise the mechanical and/or corrosion properties of the resultant assembly.

The method of the invention has been found to result in a significant lower brazing temperature. This reduced brazing temperature allows for a significant reduction of the industrial scale processing time for a whole brazing cycle, typically a time reduction of 25% or more has been found.

In an embodiment of the method of manufacturing a brazed assembly in step (a) at least one of the parts to be joined by brazing is a component made of the aluminium brazing sheet product in accordance with the invention set out above, and at least one other component is selected from the group consisting of titanium, plated titanium, coated titanium, bronze, brass, stainless steel, plated stainless steel, coated stainless steel, nickel, nickel-alloy, low-carbon steel, plated low-carbon steel, coated low-carbon steel, high-strength steel, plated high-strength steel, and coated high-strength steel.

In its preferred embodiments the brazed assembly manufactured in accordance with the invention described above, is a heat-exchanger, typically for automotive applications, or a fuel-cell, typically an electrochemical fuel cell.

### BRIEF DESCRIPTION OF THE DRAWING

The invention will now be illustrated by several non-limitative examples, and with reference to the drawings, wherein:
Fig. 1 is a schematic longitudinal section showing the structure of brazing sheet product according to the state of the art;
Fig. 2 is a schematic longitudinal section showing the structure of aluminium brazing sheet product used according to the invention;
Fig. 3 is a schematic longitudinal section showing the structure of aluminium brazing product used according to the invention.

### DESCRIPTION OF PREFERRED EMBODIMENTS

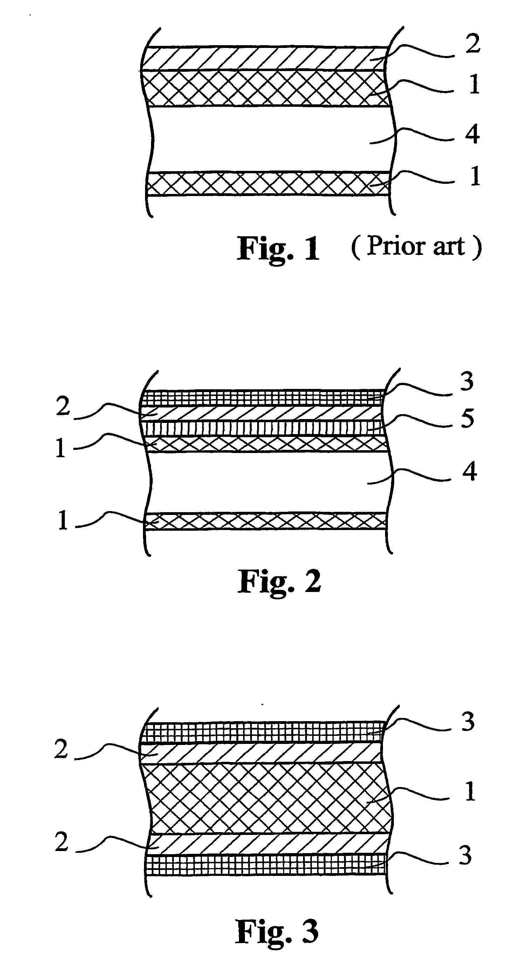

Fig. 1 shows schematically a brazing sheet in accordance with the prior art as would be obtained by the process in accordance with for example US-3,970,237. The brazing sheet product consists of a core sheet 4 on one or both sides clad with an aluminium clad layer 1 comprising an Al-Si alloy. On top of the clad layer a thin nickel layer 2, preferably a nickel-lead layer, is applied by means of electroplating.

Fig. 2 shows schematically aluminium brazing sheet in accordance with the present invention comprising an aluminium core 4, which aluminium core 4 is clad on both sides with an aluminium clad layer 1, and whereby between one aluminium clad layer 1 and the nickel layer 2 an optional further thin bonding layer 5 of zinc or tin is applied, the advantages of which are set out above. In accordance with the invention there is provided a further deposited metal layer 3 to reduce the liquidus temperature of the metal filler formed by the clad layer 1 and all layers 5, 2, 3 exterior thereto. The deposited metal layer 3 may be applied on top of the nickel layer 2 or underneath said nickel layer 2. In Fig. 2 the layers 5, 2 and 3 have been shown on only one side of the brazing sheet, but it will be immediately apparent to the skilled person that they may also be applied on both sides of the brazing sheet product. The composition of the various layers and their advantages have been set out above.

Fig. 3 shows schematically aluminium brazing product used in accordance with the present invention which does not have the core layer 4 of Fig. 2. In Fig. 3 the base substrate 1 of an Al-Si alloy is provided on both sides with a nickel layer 2, and on this nickel layer 2 there is applied a further metal layer 3, preferably comprising copper, to reduce the liquidus temperature of the metal filler formed by the base substrate and all layers exterior thereto. The brazing product shown in Fig. 3 is not provided with a bonding layer 5 (Fig. 2) of zinc or tin arranged between the base substrate 1 and the nickel layer 2, but it will be immediately apparent to the skilled person that such a bonding layer may be applied here also. As set out above, this embodiment may also be provided in the form an wire of rod material. The composition of the various layers and their advantages have been set out above.

### EXAWLES.

### Example 1.

On a laboratory scale aluminium brazing sheets manufacture from an AA3003 core alloy clad by means of roll bonding on both sides with an AA4045 clad alloy (see Table 1), and having a total thickness of 0.5mm and whereby each clad layer thickness is 50 microns, have been pre-treated by alkaline etching and desmutting with intermediate rinsing and subsequently on both sides plated with various different metal layers, see also Table 2.
- a thin zinc layer of about 30 nm has been applied using a zincate immersion treatment using ChemTec (trade name) 024202 for 12 s at room temperature.
- a nickel-lead layer has been applied using a basic bath comprising 50 g/l nickelsulphate, 50 g/l nickel chloride, 30 g/l sodium citrate, 1 g/l lead-acetate, 75 ml/l ammonium hydroxide (30%). The plating conditions at 26°C were such that a plating time of 50 s resulted in a nickel-lead plated layer of 0.5 micron thickness using a current density of 3 A/dm².
- a nickel-bismuth layer has been applied using a plating bath having the composition of Table 3 and having a pH of 5.5. The Bi-ion concentration has been added to the plating bath using a Bi-ion concentrate of 160 g/l sodium hydroxide, 300 g/l sodium gluconate and 110 g/l bismuth oxide. The bismuth oxide could have been replaced also by bismuth carbonate. The electroplating of a Ni-Bi layer was performed at 57°C.
- a copper layer is applied by electroplating using an alkaline cyanide plating bath comprising 110 g/l copper(I)cyanide, 140 g/l sodium cyanide, 90 g/l sodium carbonate, and the plating conditions were such that different plating times have been applied resulting in different layers thickness by a current density of 3 A/dm² at a temperature of 50°C. The current efficiency for the copper plating was about 70%.

As reference material commercially available brazing sheet has been used manufactured in accordance with the process described in US-3,970,237, and indicated as "REF" in Table 2.

For example sample 3 of Table 2 had the following subsequent metal layers on each side of the core sheet: AISi alloy clad layer, zinc layer, NiBi-layer, and finally a copper layer.

The composition and weight of the applied layers on both sides was determined by ICP ("Inductively Coupled Plasma"). The results per side of the core sheet have been listed in Table 2. "n.m." stands for not-measured.

The plated specimens have been tested for adhesion using the Erichsen dome test (5 mm), and the T-bend test. A value assessment is then given to the adhesion where: (-) = poor, (±) = fair, and (+) = good. The results are given in Table 2. Further the brazeability has been assessed. On a laboratory scale of testing the brazing tests were carried out in a small quartz furnace. Small coupons of 25 mm x 25 mm were cut from the plated specimen sheets. A small strip of an AA3003 alloy measuring 30 mm x 7 mm x 1 mm was bent in the centre to an angle of 45° and laid on the coupons. The strip on the coupon samples were heated under flowing nitrogen, with heating from room temperature to 580°C, dwell time at 580°C for 1 minute, cooling from 580°C to room temperature. The brazing process was judged on possible formation of wrinkles, capillary depression and fillet formation. An overall assessment was given where: (-) = poor brazeability, (-/±) = fair brazeability, (±) = good brazeability, and (+) = excellent brazeability. The results obtained are summarised in Table 2.

For each plating specimen the melting range of the applied metal filler formed by the aluminium clad layer and all layers exterior thereto has been measured by DSC ("Differential Scanning Calorimeter"). Such measurements provided a melting range whereby the higher temperature represents the liquidus temperature, often referred to as the melting temperature.

From the results of Table 2 it can be seen that a zincate treatment in accordance with the invention succeeds in achieving good adhesion of the Ni-plated plated when in contact with the thin layer.
Further it has been found that a very thin bonding layer of zinc has no influence on the melting range of the resultant filler metal.
From the comparison of sample 3 and 8 it can be seen that the sequence of the metal layers has an influence on the brazeability of the filler metal. Preferably the copper layer is being applied on top of the layer comprising nickel (sample 3).
From the samples comprising a Ni-Bi layer it can be seen that the addition on lead is not an essential element to achieve an excellent fluxless CAB brazeability, similar or even better results may be obtained when bismuth is present in the layer comprising nickel. However, the bismuth may also be added to for example the aluminium clad layer.
From the comparison of samples 5, 6 and 7 it can be seen that the presence of a layer comprising Ni is required the obtain a good brazeability in a fluxless CAB brazing environment.

In the best example, being sample 3, the thickness of the Ni-Bi layer was about 0.5 micron and the thickness of the copper-layer was about 4 micron.

The multiple plating operations, or other techniques of applying a metal layer, according to the invention may be applied also on one or both sides of an aluminium alloy sheet or strip made of an AA4000-series aluminium alloys, which aluminium alloy sheet is not being provided with a core sheet to form a brazing sheet product. Such an AA4000-series aluminium alloy sheet or strip, typically having a gauge in the range of up to 3 mm, and preferably in the range of 0.04 to 2 mm, may be employed also in a brazing operation as set out in this example. A similar approach can be used for plating multiple metal layers on AA4000-series aluminium alloy wires or rods. Such plated wires or rods may be employed in a brazing operation as set out in this example or used as filler material in a welding operation, such as for example laser welding operations.

**Table 1.**

| **Element** | **AA 3003** | **AA 4045** |
|---|---|---|
| **Si** | <0.6 | 9.0-11.0 |
| **Fe** | <0.7 | <0.8 |
| **Cu** | 0.05-0.20 | < 0.3 |
| **Mn** | 1.0-1.5 | <0.05 |
| **Mg** | - | <0.05 |
| **Zn** | <0.10 | <0.10 |
| **Ti** | - | <0.20 |
| **others** | each < 0.05 total < 0.15 | each < 0.05 total < 0.15 |
| **balance** | Al | Al |

**Table 2.**

| **Sample** | **1** | **2** | **3** | **4** | **5** | **6** | **7** | **8** | **REF** |
|---|---|---|---|---|---|---|---|---|---|
| **Zn immersion** | √ | - | √ | √ | √ | √ | - | √ | |
| **rinsing** | √ | √ | √ | √ | √ | √ | √ | √ | - |
| **NiPb plating** | √ | √ | - | - | - | - | - | - | |
| **NiBi plating** | - | - | √ | √ | √ | - | - | √ | |
| **rinsing** | √ | √ | √ | √ | √ | √ | √ | √ | |
| **Cu plating [s]** | - | - | 194 | 258 | 323 | 258 | 258 | 258 | |
| **rinsing** | √ | √ | √ | √ | √ | √ | √ | √ | |
| **plating order** | Zn NiPb | NiPb | Zn NiBi Cu | Zn NiBi Cu | Zn NiBi Cu | Zn Cu | Cu | Zn Cu NiBi | |

| **element** | **composition metal filler [weight %], balance aluminium** | | | | | | | | |
|---|---|---|---|---|---|---|---|---|---|
| Zn | 0.1 | - | 0.1 | 0.1 | 0.1 | 0.1 | - | 0.1 | - |
| **Ni** | 3.2 | 3.2 | 2.6 | 2.5 | 2.3 | - | - | 2.5 | 11.6 |
| **Pb** | 0.2 | 0.1 | - | - | - | - | - | - | 0.3 |
| **Bi** | - | - | 0.1 | 0.1 | 0.1 | - | - | 0.1 | - |
| **Cu** | - | - | 15.9 | 19.8 | 24.2 | 22.8 | 22.4 | 20.4 | - |
| **Si** | 9.7 | 9.7 | 8.1 | 7.8 | 7.3 | 7.7 | 7.8 | 7.6 | 9.4 |
| **adhesion** | + | - | + | + | + | + | - | - | ± |
| **brazeability** | + | + | + | + | + | - | - | - | + |
| **melting range (°C)** | 565 575 | 565 575 | 525 550 | 525 545 | 525 540 | 520 543 | 522 558 | 523 543 | 570 578 |

**Table 3.**

| **Compound** | **Concentration [g/1]** |
|---|---|
| Nickel sulphate | 142 |
| Ammonium sulphate | 34 |
| Nickel chloride | 30 |
| Sodium citrate | 140 |
| Sodium gluconate | 30 |
| Bismuth ions | 1 |

### Example 2.

Sample 3 of Example 1 has been repeated but instead of an AA4045 clad layer an clad layer comprising, in weight percent, 9.6% Si,1.32%Mg, balance aluminium and impurities has been used. In the plating bath the addition of Bi-ions has been omitted such that the applied Ni-layer is entirely consisting of nickel. Subsequently the same series of testing has been carried out given the same results as for Sample 3 in Example 1.

The presence of Mg in the aluminium clad layer had no detrimental effect on the brazeability of the aluminium brazing sheet product. In an amount of up to about 2.5% the Mg may even omit the addition of Bi to the aluminium clad layer and/or to the layer comprising nickel and still provide a good brazeability.

### Example 3.

Sample 4 of Example 1 has been used as a starting point for plating additional metal layers on the copper layer.

A sample 9 has been manufactured by plating a further zinc layer on the copper layer using a conventional zinc-sulphate plating bath.

And a sample 10 has been manufactured by plating a tin layer on the copper layer. The composition of the aqueous tin plating bath used was:-

| | |
|---|---|
| tin 2+ ions | 26,1 g/l |
| Fe total | 15,5 g/l |
| sulphate | 5,2 g/l |
| Phenol Sulfonic Acid | 210 g/l |

The composition of the metal filler and the melting range of the metal filler have been determined in the same manner as in Example 1, and the results have been summarised in Table 4. The composition is given is weight percent, the balance is aluminium and impurities. The impurities originate mainly from the aluminium clad layer comprising for example Fe as impurity, see also Table 1.

The plated specimens of Sample 9 and 10 had similar adhesion and brazeability results as Sample 4 of Example 1. The plated zinc and tin layer in sample 9 and 10 respectively, do not act as a bonding layer for the aluminium clad layer and the nickel layer.

From the results of Table 4 it can be seen that the use of further applied metal layers may further lower the melting range, and thus also the liquidus temperature, of the resultant filler metal while maintaining good CAB brazeability characteristics.

**Table 4.**

| **Sample** | **Composition of the metal filler** **[wt.%]** | | | | | | | **Melting range** **[°C]** |
|---|---|---|---|---|---|---|---|---|
| | **Zn** | **Ni** | **Pb** | **Bi** | **Cu** | **Si** | **Sn** | |
| 9 | 6.3 | 2.3 | - | 0.1 | 18.5 | 7.2 | - | 520 - 538 |
| 10 | 0.1 | 2.4 | - | 0.1 | 19.4 | 7.5 | 1.9 | 523 - 540 |

## Claims

1. Method of manufacturing an assembly of brazed components, comprising the steps of:-
(a) shaping parts of which at least one component is made from brazing sheet product comprising of a core sheet (4) made of an aluminium alloy having on at least one surface of said core sheet a coupled aluminium clad layer (1), the aluminium clad layer being made of an aluminium alloy comprising silicon in an amount in the range of 2 to 18% by weight, a layer (2) comprising nickel on the outer surface of said aluminium clad layer, at least one separately deposited layer (3) on one side of said layer (2) comprising nickel and being essentially lead-free, said separately deposited layer (3) comprising copper or copper-based alloy such that taken together said aluminium substrate (1) and all layers exterior thereto form a metal filler having a liquidus temperature in the range of 490 to 570°C, and preferably in the range of 510 to 550°C;
(b) assembling the parts into the assembly;
(c) brazing the assembly in an inert atmosphere in the absence of a brazing-flux at elevated temperature in the range of 490 to 570°C for a period long enough for melting and spreading of the molten filler;
(d) cooling the brazed assembly.

2. Method according to claim 1, wherein said separately deposited layer (3) comprises at least 60% by weight copper.

3. Method according to claim 1 or 2, wherein said separately deposited layer (3) has a thickness of not more than 10 micron, and preferably not more than 7 micron.

4. Method according to any one of claims 1 to 3, wherein said aluminium base substrate (1) further comprises magnesium in a range of up to 8%, and preferably in a range of 0.5 to 5%.

5. Method according to any one of claims 1 to 4, wherein said layer (2) comprising nickel further comprises bismuth in a range up to 5 % by weight.

6. Method according to any one of claims 1 to 5, wherein said layer (2) comprising nickel has a thickness of not more than 2 micron, preferably not more than 1 micron.

7. Method according to any one of claims 1 to 6, wherein said layer (2) comprising nickel is applied by means of electroplating.

8. Method according to any one of claims 1 to 7, **characterised by** a further layer (5) comprising zinc or tin as a bonding layer between said outer surface of said aluminium base clad layer (1) and said layer comprising nickel (2).

9. Method according to claim 8, wherein said bonding layer (5) has a thickness of not more than 0.5 micron, preferably not more than 0.3 micron.

10. Method according to any one of claims 1 to 9, wherein taken together said aluminium clad layer and all layers exterior thereto, have a composition comprising at least, by weight percent:-
Si in the range of 5 to 10 %,
Cu in the range of 12 to 25 %,
Bi in the range up to 0.25 %, and preferably in the range of 0.02 to 0.25%,
Ni in the range of 0.05 to 4 %,
Zn in the range up to 0.25 %,
balance aluminium and impurities.

11. Method according to any one of claims 1 to 10, wherein taken together said aluminium clad layer and all layers exterior thereto, have a composition comprising at least, by weight percent:-
Si in the range of 5 to 10 %,
Cu in the range of 12 to 25 %,
Bi in the range up to 0.25 %, and preferably in the range of 0.02 to 0.25%,
Ni in the range of 0.05 to 4 %,
Zn in the range up to 20 %,
Sn in the range up to 5 %,
Mg in the range up to 5%,
balance aluminium and impurities.

12. Method according to any one of claims 1 to 11, wherein the aluminium clad layer comprises, in weight percent:
| | |
|---|---|
| Si | 2 to 18, preferably 5 to 14, |
| Mg | up to 8, preferably up to 5, |
| Zn | up to 5.0, |
| Cu | up to 5.0, |
| Mn | up to 0.5, |
| In | up to 0.3, |
| Fe | up to 0.8, |
| Sr | up to 0.2, |
optionally one or more elements selected from the group consisting of:-
| | |
|---|---|
| Bi | 0.01 to 1.0 |
| Pb | 0.01 to 1.0 |
| Li | 0.01 to 1.0 |
| Sb | 0.01 to 1.0, |
impurities each up to 0.05, total up to 0.20, balance aluminium.

13. Method according to any one of claims 1 to 12, wherein thee brazed assembly is a heat-exchanger.

14. Method according to any one of claims 1 to 12, wherein the brazed assembly is a fuel-cell, in particular an electrochemical fuel cell.

## Patentansprüche

1. Verfahren zur Herstellung einer Anordnung aus hartgelöteten Bestandteilen, das die folgenden Schritte umfasst:
(a) Formen von Teilen, von denen zumindest ein Bestandteil aus einem Hartlötblechprodukt hergestellt ist, bestehend aus:einem Kernblech (4) aus einer Aluminiumlegierung mit zumindest auf einer Oberfläche des Kernblechs befindlichen verbundenen Aluminiumplattierschicht (1), wobei die Aluminiumplattierschicht aus einer Aluminiumlegierung besteht, die Silizium in einer Menge im Bereich von 2 bis 18 Gewichtsprozent enthält, einer Schicht (2), die Nickel auf der Außenfläche der Aluminiumplattierschicht enthält, wenigstens eine getrennt aufgebrachte Schicht (3) auf einer Seite der Schicht (2), die Nickel enthält und im Wesentlichen bleifrei ist, wobei die getrennt aufgebrachte Schicht (3) Kupfer oder eine auf Kupfer basierende Legierung enthält, so dass das Aluminiumsubstrat (1) und alle demgegenüber äußeren Schichten zusammen einen Metallfüllstoff bilden, der eine Liquidustemperatur im Bereich von 490 bis 570°C, und vorzugsweise zwischen 510 und 550°C, hat;
(b) Zusammensetzen der Teile zu der Anordnung;
(c) Hartlöten der Anordnung in einer inerten Atmosphäre ohne ein Hartlötflussmittel bei einer erhöhten Temperatur im Bereich zwischen 490 und 570°C über einen ausreichend langen Zeitraum, um den geschmolzenen Füllstoff zu schmelzen und zu verteilen;
(d) Abkühlen der hartgelöteten Anordnung.

2. Verfahren nach Anspruch 1, bei dem die getrennt aufgebrachte Schicht (3) wenigstens 60 Gew.-% Kupfer enthält.

3. Verfahren nach Anspruch 1 oder 2, bei dem die getrennt aufgebrachte Schicht (3) eine Dicke von nicht mehr als 10 Mikrometer, und vorzugsweise von nicht mehr als 7 Mikrometer, aufweist.

4. Verfahren nach einem der Ansprüche 1 bis 3, bei dem das Aluminiumbasissubstrat (1) ferner Magnesium im Bereich von bis zu 8% enthält, und vorzugsweise im Bereich von 0,5 bis 5%.

5. Verfahren nach einem der Ansprüche 1 bis 4, bei dem die Nickel enthaltende Schicht (2) ferner Wismut in einem Bereich bis zu 5 Gew.-% enthält.

6. Verfahren nach einem der Ansprüche 1 bis 5, bei dem die Nickel enthaltende Schicht (2) eine Dicke von nicht mehr als 2 Mikrometer, vorzugsweise nicht mehr als 1 Mikrometer, aufweist.

7. Verfahren nach einem der Ansprüche 1 bis 6, bei dem die Nickel enthaltende Schicht (2) durch Elektroplattieren aufgebracht wird.

8. Verfahren nach einem der Ansprüche 1 bis 7, **gekennzeichnet durch** eine weitere Schicht (5), die Zink oder Zinn als Verbindungsschicht zwischen der Außenfläche der Aluminiumbasisplattierschicht (1) und der Nickel enthaltenden Schicht (2) enthält.

9. Verfahren nach Anspruch 8, bei dem die Verbindungsschicht (5) eine Dicke von nicht mehr als 0,5 Mikrometer, vorzugsweise von nicht mehr als 0,3 Mikrometer aufweist.

10. Verfahren nach einem der Ansprüche 1 bis 9, bei dem die Aluminiumplattierschicht und alle dieser gegenüber äußeren Schichten zusammengenommen zumindest folgende Legierungsbestandteile, in Gew.-%, aufweisen: -
Si im Bereich von 5 bis 10 %,
Cu im Bereich von 12 bis 25 %,
Bi im Bereich bis zu 0,25 %, und vorzugsweise im Bereich von 0,02 bis 0,25 %,
Ni im Bereich von 0,05 bis 4 %,
Zn im Bereich bis zu 0,25 %,
Rest Aluminium und Verunreinigungen.

11. Verfahren nach einem der Ansprüche 1 bis 10, bei dem die Aluminiumplattierschicht und alle dieser gegenüber äußeren Schichten zusammengenommen zumindest folgende Legierungsbestandteile, in Gew.-%, aufweisen: -
Si im Bereich von 5 bis 10 %,
Cu im Bereich von 12 bis 25 %,
Bi im Bereich bis zu 0,25 %, und vorzugsweise im Bereich von 0,02 bis 0,25 %,
Ni im Bereich von 0,05 bis 4 %,
Zn im Bereich bis zu 20 %,
Sn im Bereich bis zu 5 %,
Mg im Bereich bis zu 5 %,
Rest Aluminium und Verunreinigungen.

12. Verfahren nach einem der Ansprüche 1 bis 11, bei dem die Aluminiumplattierschicht, in Gew.-%, enthält:
| | |
|---|---|
| Si | 2 bis 18, vorzugsweise 5 bis 14, |
| Mg | bis zu 8, vorzugsweise bis zu 5, |
| Zn | bis zu 5,0, |
| Cu | bis zu 5,0, |
| Mn | bis zu 0,5, |
| In | bis zu 0,3, |
| Fe | bis zu 0,8, |
| Sr | bis zu 0,2, |
wahlweise ein oder mehrere Elemente aus der Gruppe bestehend aus: -
| | |
|---|---|
| Bi | 0,01 bis 1,0 |
| Pb | 0,01 bis 1,0 |
| Li | 0,01 bis 1,0 |
| Sb | 0,01 bis 1,0, |
Verunreinigungen jeweils bis zu 0,05, insgesamt bis zu 0,20, Rest Aluminium.

13. Verfahren nach einem der Ansprüche 1 bis 12, bei dem die hartgelötete Anordnung ein Wärmetauscher ist.

14. Verfahren nach einem der Ansprüche 1 bis 12, bei dem die hartgelötete Anordnung eine Brennstoffzelle, insbesondere eine elektrochemische Brennstoffzelle, ist.

## Revendications

1. Procédé de fabrication d'un assemblage de pièces brasées, **caractérisé en ce qu'**il comprend les étapes consistant à :
(a) façonner des pièces dont au moins un constituant est une tôle à brasage comprenant une feuille centrale (4) en alliage d'aluminium sur au moins une surface de laquelle est appliquée une couche d'aluminium plaquée (1), la couche d'aluminium plaquée étant en alliage d'aluminium contenant du silicium à raison de 2 à 18 % en poids, une couche (2) contenant du nickel sur la surface extérieure de ladite couche d'aluminium plaquée, au moins une couche (3) déposée séparément sur une face de ladite couche (2) contenant du nickel et sensiblement pas de plomb, ladite couche (3) déposée séparément contenant du cuivre ou un alliage de cuivre de façon que ledit substrat en aluminium (1) et toutes les couches extérieures à celui-ci forment conjointement un métal d'apport à température de liquidus de 490 à 470°C, et de préférence de 510 à 550°C ;
(b) assembler les pièces pour créer l'assemblage ;
(c) braser l'assemblage sous une atmosphère inerte en l'absence d'un fondant de brasage fort à haute température de 490 à 470°C pendant suffisamment longtemps pour la fusion et l'étalement du métal d'apport en fusion ;
(d) refroidir l'assemblage brasé.

2. Procédé selon la revendication 1, **caractérisé en ce que** ladite couche (3) déposée séparément contient au moins 60 % en poids de cuivre.

3. Procédé selon la revendication 1 ou 2, **caractérisé en ce que** ladite couche (3) déposée séparément a une épaisseur non supérieure à 10 micromètres, et de préférence non supérieure à 7 micromètres.

4. Procédé selon l'une quelconque des revendications 1 à 3, **caractérisé en ce que** ledit substrat (1) en aluminium contient en outre du magnésium à raison d'un maximum de 8 %, et de préférence de 0,5 à 5 %.

5. Procédé selon l'une quelconque des revendications 1 à 4, **caractérisé en ce que** ladite couche (2) contenant du nickel contient en outre du bismuth à raison d'un maximum de 5 % en poids.

6. Procédé selon l'une quelconque des revendications 1 à 5, **caractérisé en ce que** ladite couche contenant du nickel a une épaisseur non supérieure à 2 micromètres, de préférence non supérieure à 1 micromètre.

7. Procédé selon l'une quelconque des revendication 1 à 6, **caractérisé en ce que** ladite couche contenant du nickel est appliquée par dépôt électrolytique.

8. Procédé selon l'une quelconque des revendications 1 à 7, **caractérisé par** une autre couche (5) contenant du zinc ou de l'étain, servant de couche de liaison entre ladite surface extérieure de ladite couche plaquée (1) à base d'aluminium et ladite couche (2) contenant du nickel.

9. Procédé selon la revendication 8, **caractérisé en ce que** ladite couche de liaison (2) a une épaisseur non supérieure à 0,5 micromètre, de préférence non supérieure à 0,3 micromètre.

10. Procédé selon l'une quelconque des revendications 1 à 9, **caractérisé en ce que** ladite couche d'aluminium plaquée et toutes les couches extérieures à celle-ci ont conjointement une composition comprenant au moins, en pourcentage de poids :
Si à raison de 5 à 10%,
Cu à raison de 12 à 25 %,
Bi à raison d'un maximum de 0,25 %, et de préférence de 0,02 à 0,25 %,
Ni à raison de 0,05 à 4 %,
Zn à raison d'un maximum de 0,25 %,
Le reste étant constitué d'aluminium et d'impuretés.

11. Procédé selon l'une quelconque des revendications 1 à 10, **caractérisé en ce que** ladite couche d'aluminium plaquée et toutes les couches extérieures à celle-ci ont conjointement une composition comprenant au moins, en pourcentage de poids :
Si à raison de 5 à 10%,
Cu à raison de 12 à 25 %,
Bi à raison d'un maximum de 0,25 %, et de préférence de 0,02 à 0,25 %,
Ni à raison de 0,05 à 4 %,
Zn à raison d'un maximum de 20 %,
Sn à raison d'un maximum de 5 %,
Mg à raison d'un maximum de 5 %,
Le reste étant constitué d'aluminium et d'impuretés.

12. Procédé selon l'une quelconque des revendications 1 à 11, **caractérisé en ce que** la couche d'aluminium plaquée contient, en pourcentage de poids :
| | |
|---|---|
| Si | 2 à 18, de préférence 5 à 14, |
| Mg | maximum 8, de préférence maximum 5, |
| Zn | maximum 5,0, |
| Cu | maximum 5,0, |
| Mn | maximum 0,5, |
| In | maximum 0,3, |
| Fe | maximum 0,8, |
| Sr | maximum 0,2, |
éventuellement un ou plusieurs éléments choisis dans le groupe comprenant :
| | |
|---|---|
| Bi | 0,01 à 1,0 |
| Pb | 0,01 à 1,0 |
| Li | 0,01 à 1,0 |
| Sb | 0,01 à 1,0, |
des impuretés, chacune à un maximum de 0,05, pour un total maximal de 0,20, le reste étant de l'aluminium.

13. Procédé selon l'une quelconque des revendications 1 à 12, **caractérisé en ce que** l'assemblage brasé est un échangeur de chaleur.

14. Procédé selon l'une quelconque des revendications 1 à 12, **caractérisé en ce que** l'assemblage brasé est une pile à combustible, en particulier une pile à combustible électrochimique.
